# EUROPEAN PATENT APPLICATION

(11) **EP 4 779 137 A1**
(43) Date of publication of application: **22.07.2026**
(21) Application number: 26152720.4
(22) Date of filing: 19.01.2026
(51) Int. Cl.: F02C 7/042, F02C 7/057, F02K 3/02

(54) **GAS TURBINE ENGINE WITH VARIABLE AIRFLOW INLET**

(30) Priority: 17.01.2025 US 202519029149
(71) Applicant: RTX Corporation, Farmington, CT 06032 (US)
(72) Inventor: YAZICI, Murat, Glastonbury (US); MORTON, Jeffrey T., Manchester (US); GIANNAKOPOULOS, Konstantinos P., Middletown (US); CLARK, Thomas E., Wells (US); NOLAN, Sean P R, Wethersfield (US)
(74) Representative: Dehns

(57) **Abstract**

A gas turbine engine (20) disposed within a nacelle (42) is provided that includes an open rotor propulsion system (28), a compressor section (30), an airflow inlet (24), and an inlet panel structure actuation system (58). The airflow inlet (24) is in fluid communication with the compressor section (30). The airflow inlet (24) is defined by a plurality of inlet panel structures (56). Each inlet panel structure (56) includes an inlet side segment (60) and an outer panel segment (62). The inlet side segments (60) collectively define an outer radial surface (52) of the airflow inlet (24). The inlet side segment (60) and the outer panel segment (62) of each inlet panel structure (56) intersect at an inlet panel leading edge. The inlet panel structure actuation system (58) is configured to selectively actuate the inlet panel leading edge of each inlet panel structure (56) in a radial inward direction or in a radial outward direction.

## Description

### BACKGROUND OF THE INVENTION

### 1. Technical Field

The present disclosure relates to gas turbine engines in general and airflow inlets in particular.

### 2. Background Information

A turbofan gas turbine engine includes a fan section, a compressor section, a combustion section, and a turbine section. Air entering the engine passes through the fan section. A portion of the air exiting the fan section enters a core gas path and the remainder enters a bypass air path disposed radially outside of the core of the engine. Air passing through the bypass air path produces thrust and exits the gas turbine engine. The core gas path extends through the core of the engine, including the compressor section, the combustion section, and the turbine section. Core gas (i.e., a mixture of non-combusted air and gaseous combustion products) exiting the turbine section passes through a turbine exhaust case and exits the engine.

A person of skill in the art will recognize that dirt and debris ingested into the core of the engine is detrimental to the engine and its operation. It would be useful to provide a gas turbine engine that is configured to decrease the amount of dirt and debris ingested into the core of the engine.

### SUMMARY

According to an aspect of the present disclosure, a gas turbine engine disposed within a nacelle is provided. The gas turbine engine includes an open rotor propulsion system, a compressor section, a combustion section, a turbine section, an annular airflow inlet, and an inlet panel structure actuation system. The annular airflow inlet is in fluid communication with the compressor section. The airflow inlet is defined by an inner radial surface and a plurality of inlet panel structures. Each inlet panel structure includes an inlet side segment and an outer panel segment, and the inlet side segments collectively define an outer radial surface of the airflow inlet. The inlet side segment and the outer panel segment of each inlet panel structure intersect at an inlet panel leading edge. The plurality of inlet panel structures are disposable in a radial inner most configuration and in a radial outer most configuration. In the radial inner most configuration, the inlet panel leading edges are disposed a first distance from the inner radial surface, and in the radial outer most configuration the inlet panel leading edges are disposed a second distance from the inner radial surface. The second distance is greater than the first distance. The inlet panel structure actuation system is configured to selectively actuate the plurality of inlet panel structures between the radial inner most configuration and the radial outer most configuration.

In any of the aspects or embodiments described above and herein, the gas turbine engine may extend axially along a centerline, and the open rotor propulsion (ORP) system may include an ORP rotor and a plurality of ORP stator vanes disposed downstream of and axially spaced apart from the ORP rotor.

In any of the aspects or embodiments described above and herein, the airflow inlet may be disposed axially between the ORP rotor and a plurality of ORP stator vanes.

In any of the aspects or embodiments described above and herein, in the radial inner most configuration the inlet panel leading edges may be collectively disposed at a first radius, and in the radial outer most configuration the inlet panel leading edges may be collectively disposed at a second radius, and the second radius is greater than the first radius.

In any of the aspects or embodiments described above and herein, the inlet panel structure actuation system may be configured to selectively pivot the plurality of inlet panel structures to translate the inlet panel leading edge of each inlet panel structure radially inward or radially outward.

In any of the aspects or embodiments described above and herein, adjacent inlet panel structures may overlap with one another.

In any of the aspects or embodiments described above and herein, the gas turbine engine may include guide vanes disposed within the airflow inlet.

In any of the aspects or embodiments described above and herein, the inlet panel structure actuation system may include an actuator and a controller. The controller may be in communication with the actuator and a non-transitory memory storing instructions. The instructions when executed may cause the processor to control the actuator to actuate the inlet panel structures toward the radial inner most configuration or toward the radial outer most configuration.

In any of the aspects or embodiments described above and herein, the controller may be configured to receive input commands from an operator and act on the input commands to actuate the inlet panel structures toward the radial inner most configuration or toward the radial outer most configuration.

In any of the aspects or embodiments described above and herein, the controller may be configured to receive an engine power setting input and execute the stored instructions based on the engine power setting input to actuate the inlet panel structures toward the radial inner most configuration or toward the radial outer most configuration.

In any of the aspects or embodiments described above and herein, the controller may be configured to receive an aircraft altitude input value and execute the stored instructions based on the aircraft altitude input value to actuate the inlet panel structures toward the radial inner most configuration or toward the radial outer most configuration.

In any of the aspects or embodiments described above and herein, the controller may be configured to receive an aircraft geographical location data input and execute the stored instructions based on the aircraft geographical location data input to actuate the inlet panel structures toward the radial inner most configuration or toward the radial outer most configuration.

In any of the aspects or embodiments described above and herein, the controller may be configured to receive an operating parameter input and execute the stored instructions using the operating parameter input to determine a configuration of the annular airflow inlet.

In any of the aspects or embodiments described above and herein, the inlet panel leading edge may be disposed at an inflection point between the inlet side segment and the outer panel segment of each inlet panel structure.

In any of the aspects or embodiments described above and herein, the inlet side segment and the outer panel segment may be independent of one another.

In any of the aspects or embodiments described above and herein, the inlet side segment and the outer panel segment may be integrally formed with one another.

According to an aspect of the present disclosure, a gas turbine engine disposed within a nacelle is provided that includes an open rotor propulsion system, a compressor section, an airflow inlet, and an inlet panel structure actuation system. The airflow inlet is in fluid communication with the compressor section. The airflow inlet is defined by a plurality of inlet panel structures. Each inlet panel structure includes an inlet side segment and an outer panel segment. The inlet side segments collectively define an outer radial surface of the airflow inlet. The inlet side segment and the outer panel segment of each inlet panel structure intersect at an inlet panel leading edge. The inlet panel structure actuation system is configured to selectively actuate the inlet panel leading edge of each inlet panel structure in a radial inward direction or in a radial outward direction.

In any of the aspects or embodiments described above and herein, the airflow inlet has an inlet flow area, and actuating the inlet panel leading edge of each inlet panel structure in the radial inward direction may decrease the inlet flow area, and actuating the inlet panel leading edge of each inlet panel structure in the radial outward direction may increase the inlet flow area.

In any of the aspects or embodiments described above and herein, the gas turbine engine extends axially along a centerline, and the open rotor propulsion (ORP) system may include an ORP rotor and a plurality of ORP stator vanes disposed downstream of and axially spaced apart from the ORP rotor, and the airflow inlet may be disposed axially between the ORP rotor and a plurality of ORP stator vanes.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine embodiment.
FIG. 2 is a diagrammatic partial view of a gas turbine engine embodiment showing an airflow inlet.
FIG. 3 is a diagrammatic partial view of a gas turbine engine showing a present disclosure airflow inlet embodiment in a radial inner most configuration.
FIG. 4 is a diagrammatic partial view of a gas turbine engine showing a present disclosure airflow inlet embodiment in a radial outer most configuration.
FIG. 5 is a diagrammatic view of a present disclosure inlet panel structure embodiment.
FIG. 5A is a diagrammatic view of a present disclosure inlet panel structure embodiment.

### DETAILED DESCRIPTION

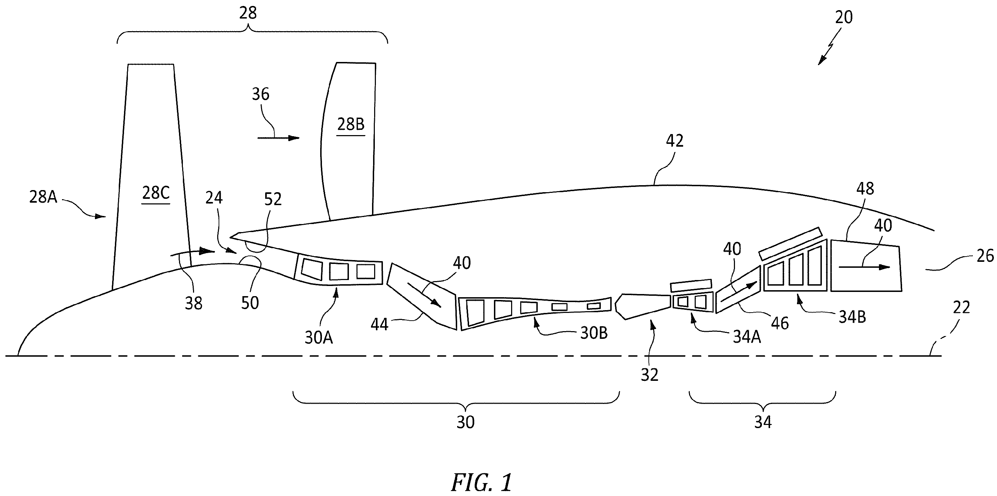

FIG. 1 shows a diagrammatic view of a gas turbine engine 20 in an open rotor configuration. The gas turbine engine 20 extends along an axial centerline 22. The gas turbine engine 20 includes an airflow inlet 24, an exhaust 26, an open rotor propulsion system 28, a compressor section 30, a combustion section 32, and a turbine section 34. The open rotor propulsion ("ORP") system 28 includes an ORP rotor 28A and a plurality of stator vanes 28B (sometimes referred to as "swirl recovery vanes" or "SRVs") that are disposed downstream of the ORP rotor 28A. The ORP rotor 28A includes a plurality of ORP blades 28C. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A is connected to and driven by the LPT 34B through a low-speed shaft (not shown). The HPC 30B is connected to and driven by the HPT 34A through a high-speed shaft (not shown). A geared architecture (e.g., a reduction gear box) may be included that enables the engine 20 to drive the ORP rotor 28A at a different rotational speed than the compressor section 30 or the turbine section 34.

The air that is worked by the ORP rotor 28A may be described as comprising an "external fan flow" portion 36 and a "core gas flow" portion 38. The external fan flow portion 36 passes in a generally aft direction outside of a nacelle 42 that houses the gas turbine engine 20. The external fan flow portion 36 produces thrust. The stator vanes 28B (e.g., "swirl recovery vanes") disposed aft of the ORP rotor 28A help to organize the external fan flow portion 36 to maximize the amount of useful thrust produced. The core gas flow portion 38 enters the core gas path 40 of the gas turbine engine 20 through the airflow inlet 24 disposed aft of the ORP rotor 28A. The core gas path 40 extends through the LPC 30A, the intermediate case 44, the HPC 30B, the combustion section 32, the HPT 34A, the mid-turbine frame 46, the LPT 34B, and the turbine exhaust case 48. Core gas exiting the LPT exits the engine 20 via the exhaust 26.

The gas turbine engine 20 configuration diagrammatically shown in FIG. 1 is an example provided to facilitate the description herein. The present disclosure may be implemented with a variety of different gas turbine engine 20 configurations and is not therefore limited to the gas turbine engine 20 configuration diagrammatically shown in FIG. 1.

The terms "forward", "leading", "aft, "trailing" are used herein to indicate the relative position of a component or surface. As air passes through the engine 20, a leading edge of a stator vane or rotor blade encounters the air before the trailing edge of the same. In a conventional axial engine such as that shown in FIG. 1, the compressor section 30 is forward of the combustion section 32 and the turbine section 34 is aft of the combustion section 32. The terms "inner radial" and "outer radial" refer to relative radial positions from the engine centerline 22. An inner radial component or path is disposed radially closer to the engine axial centerline 22 than an outer radial component or path.

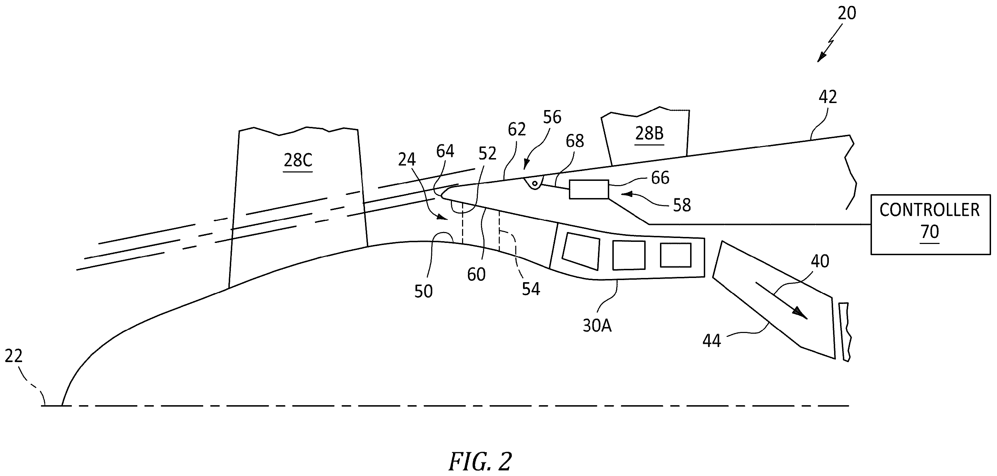

Referring to FIG. 2, the inlet to the core gas path 40 (i.e., the airflow inlet 24) is configured as an annular opening defined by an inner radial surface 50 and an outer radial surface 52. The airflow inlet 24 may be defined in terms of a plane that extends across the opening between the inner and outer radial surfaces 50, 52; e.g., as will be detailed herein a plane that is tangential to the IP leading edge and that extends to the inner radial surface 50.

In some embodiments, a plurality of positionally fixed guide vanes 54 or other flow directing structure (hereinafter collectively referred to as "guide vanes 54"; shown in dashed lines in FIG. 2) may be disposed proximate the airflow inlet 24 extending generally radially across the annular airflow inlet 24, and distributed around the circumference of the airflow inlet 24. The present disclosure does not require guide vanes 54 at the airflow inlet 24.

Referring to FIGS. 2-4, embodiments of the present disclosure include a plurality of airflow inlet panel structures 56 and an inlet panel structure actuation system 58.

The airflow inlet panel structures 56 define the outer radial side of the airflow inlet 24. Each of the inlet panel structures 56 includes an inlet side segment 60 and an outer panel segment 62. The inlet side segment 60 and the outer panel segment 62 intersect with one another at a forwardly disposed inflection point, referred to hereinafter as the inlet panel (IP) leading edge 64. The inlet side segment 60 defines the outer radial surface 52 of the airflow inlet 24. The outer panel segment 62 extends in an aft direction (radially outside of the inlet side segment 60) and engages with an outer segment of the nacelle 42. The inlet side segment 60 and the outer panel segment 62 of an inlet panel structure 56 may be independent of one another or an inlet panel structure 56 may include an inlet side segment 60 and an outer panel segment 62 integrally formed as a unitary construct. As will be detailed herein, the inlet panel structures 56 may be actuated to change the configuration of the airflow inlet 24.

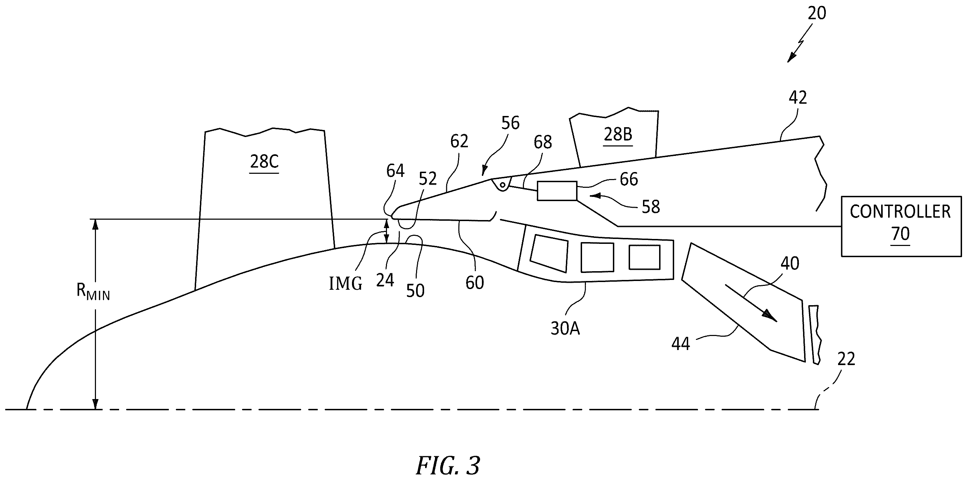

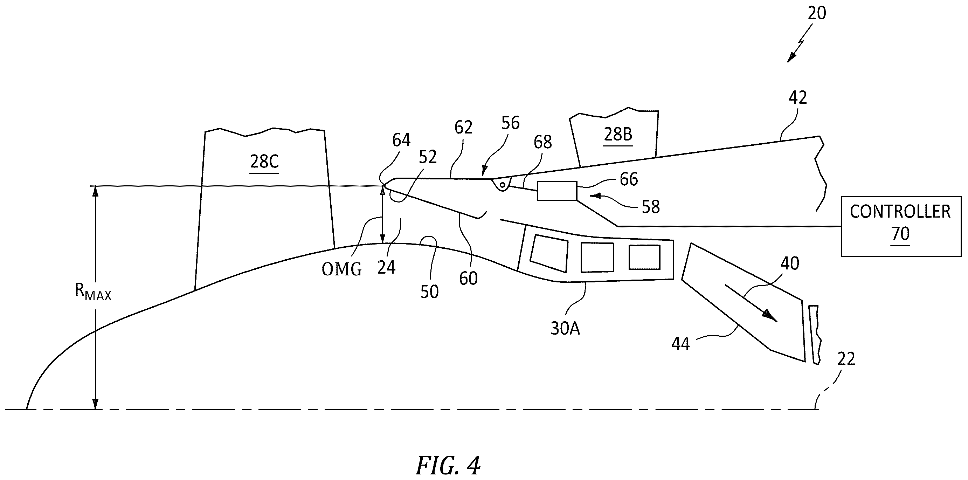

The inlet panel structures 56 may be actuated between a plurality of different circumferential configurations within a range from a radial inner most configuration to a radial outer most configuration. In the radial inner most configuration, the IP leading edges 64 are disposed at a minimum radius ("R_{MIN}" - see FIG. 3) from the engine centerline 22, and the circumference formed by the IP leading edges 64 is a minimum circumference. In the radial outer most configuration, the IP leading edges 64 are disposed at a maximum radius ("R_{MAX}" - see FIG. 4) from the engine centerline 22, and the circumference formed by the IP leading edges 64 is a maximum circumference. Hence, the maximum radius is greater than the minimum radius (R_{MAX} > R_{MIN}), and the maximum circumference is greater than the minimum circumference. The flow area of the airflow inlet 24 (i.e., the area through which air may flow through the airflow inlet 24 and into the compressor section 30) is at a minimum when the inlet panel structures 56 are disposed in the radial inner most configuration, and is at a maximum when the inlet panel structures 56 are disposed in the radial outer most configuration. The inlet panel structures 56 are not limited to the radial inner and outer most configurations, and may be actuated to a plurality of different radial positions therebetween.

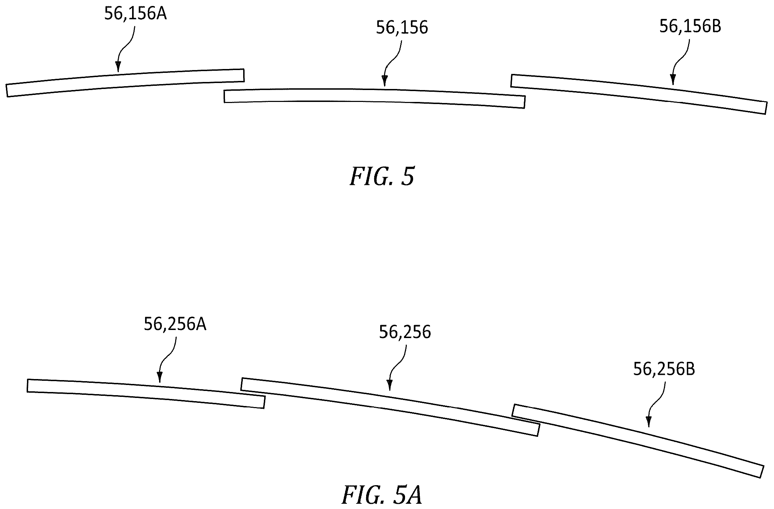

The inlet panel structures 56 are configured to permit articulation between the radial inner most configuration and the radial outer most configuration. For example as diagrammatically shown in FIG. 5, a central inlet panel structure 156 may overlap with a first lateral inlet panel structure 156A disposed on a first lateral side, and with a second lateral inlet panel structure 156B disposed on a second lateral side opposite the first lateral side. The circumference formed by the IP leading edges 64 (and therefore the flow area of the airflow inlet 24) may be decreased by actuating the inlet panel structures 56 so that the IP leading edges 64 (e.g., see FIG. 3) pivot radially inward. As the IP leading edges 64 pivot radially inward, the overlap between adjacent inlet panel structures 56 increases and the circumference at the IP leading edges 64 decreases. Conversely, the circumference formed by the IP leading edges 64 (and therefore the flow area of the airflow inlet 24) may be increased by actuating the inlet panel structures 56 so that the IP leading edges 64 pivot radially outward; e.g., see FIG. 4. As the IP leading edges 64 pivot radially outward, the overlap between adjacent inlet panel structures 56 decreases and the circumference at the IP leading edges 64 increases.

FIG. 5A diagrammatically illustrates another embodiment wherein inlet panel structures 56 overlap one another to permit articulation. In this example, adjacent inlet panel structures 56 overlap in a repeating pattern; e.g., the right-side inlet panel structure 256B overlaps the center inlet panel structure 256, and the center inlet panel structure 256 overlaps left-side inlet panel structure 256A, and this pattern repeats circumferentially. Here again, the circumference formed by the IP leading edges 64 (and therefore the flow area of the airflow inlet 24) may be decreased or increased by actuating the inlet panel structures 56; e.g., pivoting the IP leading edges 64 radially inward or outward. The configurations of the inlet panel structures 56 shown in FIGS. 5 and 5A are provided to illustrate examples of inlet panel structures 56 that may be actuated to increase or decrease the circumference formed by the IP leading edges 64 and the flow area of the airflow inlet 24. The present disclosure is not limited to these inlet panel structure 56 configurations.

Referring to FIGS. 2-4, embodiments of the present disclosure include an inlet panel structure actuation system 58 that is operable to actuate the inlet panel structures 56 between the radial inner most configuration and the radial outer most configuration. The actuation system 58 includes one or more actuators 66 and one or more linkages 68 in communication with the actuator(s) 66. The actuators 66 may be electromechanically operable, or fluidically operable (e.g., hydraulic or pneumatic), or the like. The present disclosure is not limited to any particular type of actuator 66. The linkage 68 is configured to accept drive motion from the actuator(s) 66 (e.g., either rotational drive, or linear drive, or any combination thereof) and transfer that drive motion to the inlet panel structures 56, thereby causing the inlet panel structures 56 to articulate from a current configuration toward the radial inner most configuration or toward the radial outer most configuration. In those present disclosure embodiments that include guide vanes 54 disposed across the airflow inlet 24, the inlet panel structures 56 and the inlet panel structure actuation system 58 may be configured to pivot the IP leading edges 64 (radially inward and outward) relative to the guide vanes 54 when transitioning toward the radial inner most configuration or toward the radial outer most configuration. In those present disclosure embodiments that include guide vanes 54 configured to be selectively oriented relative to the direction of the airflow through the airflow inlet 24, the positioning of the guide vanes 54 and the actuation of the inlet panel structures 56 by the inlet panel structure actuation system 58 may be coordinated. Sensors (not shown) may be used to provide feedback information regarding the position of the inlet panel structures 56.

In some embodiments, the inlet panel structure actuation system 58 may include or be in communication with a controller 70 that is in communication with other system components such as actuators 66 within the inlet panel structure actuation system 58; e.g., to control the operation of the inlet panel structure actuation system 58 and/or to receive signals therefrom and/or transmit signals thereto to perform the functions described herein. The controller 70 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present disclosure to accomplish the same algorithmically and/or coordination of system components. The controller 70 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller 70 may include, or may be in communication with, an input device (not shown) that enables a user to enter data and/or instructions, and may include, or be in communication with, an output device (not shown) configured, for example to display information (e.g., a visual display, or the like), or to transfer data, etc. Communications between the controller 70 and other system components may be via a hardwire connection or via a wireless connection.

During operation of a gas turbine engine 20 used to power an aircraft, the engine 20 may be controlled to operate in a plurality of different engine power settings; e.g., start-up, idle, taxiing mode, take-off, cruise, deceleration, and landing. These different engine power settings are likely to have different volumetric rates for the external fan flow portion 36 and the core gas flow portion 38. The streamlines of air (e.g., see FIG. 2) encountering the airflow inlet 24 region may vary as a result of the engine power setting.

It is known that during ground and low above-ground altitude operations of an aircraft gas turbine engine 20 (e.g., idle, taxing, take-off and the like), there is a greater propensity for the engine 20 to ingest dirt and/or debris. The dirt and/or debris, if ingested into the core gas path 40 of the engine 20 can produce detrimental effects such as debris build up on components, cooling passage cloggage, and the like.

The present disclosure provides a mechanism for selectively altering the flow area of the airflow inlet 24, including the radial position of the airflow inlet 24 outer circumference; i.e., the radial position of the IP leading edges 64. By selectively altering the airflow inlet 24 area and the radial position of the airflow inlet 24 outer circumference, the present disclosure is understood to provide several benefits.

For example, the present disclosure inlet panel structure actuation system 58 can be operated to actuate the inlet panel structures 56 toward an inner configuration (e.g., partially or all the way to the radial inner most configuration) during an engine idle power setting, or during an engine taxiing power setting, or during low above-ground altitude operations of the aircraft (e.g., take-off and low altitude climb), or any combination thereof. FIG. 3 diagrammatically illustrates the inlet panel structures 56 in a radial inner most configuration, and illustrates the gap distance ("Inner Most Gap" or "IMG") across the airflow inlet 24 in the radial inner most configuration; e.g., the distance between the inner radial surface 50 of the airflow inlet 24 and the IP leading edge 64. The actuation of the inlet panel structures 56 so that the IP leading edges 64 are translated radially inward, moves the IP leading edges 64 away from airflow streamlines and any dirt and debris particles that may be entrained therein. The translation of the IP leading edges 64 radially inward is also understood to produce improved airflow streamlines proximate the outer panel segment 62 of the inlet panel structures 56 and proximate the exterior surface of the nacelle 42. FIG. 4 diagrammatically illustrates the inlet panel structures 56 of the airflow inlet 24 in a radial outer most configuration, and illustrates the gap distance ("Outer Most Gap" or "OMG") across the annular airflow inlet 24 in the radial outer most configuration; e.g., the distance between the inner radial surface 50 of the airflow inlet 24 and the IP leading edge 64. The annular airflow inlet 24 may be controlled to be in the radial outer most configuration when the aircraft is at an altitude that is associated with "clean" or "debris-free" air. It should be noted that the demarcation between "dirty air" and "clean / debris-free" air may be a function of multiple factors, including the above-ground altitude at which the engine 20 is operating, or the geographic location at which the engine 20 is operating, or the calendar season in which the engine 20 is operating, or the like, or any combination thereof. To be clear, the present disclosure inlet panel structure actuation system 58 can be operated to actuate the inlet panel structures 56 to any configuration; i.e., the radial inner most configuration, the radial outer most configuration, or any configuration therebetween.

Embodiments of the present disclosure may be configured so that the inlet panel structure actuation system 58 can be operated manually (e.g., input commands from an aircraft operator) to actuate the inlet panel structures 56 between the radial inner most configuration and the radial outer most configuration, or may be configured so that the inlet panel structure actuation system 58 is operated in an automated manner based on stored instructions (e.g., executed by the controller 70) with input from engine control systems indicative of the power setting of the gas turbine engine 20 and/or other operating parameters such as above-ground altitude, geographic location, calendar season, or the like, or any combination thereof. In some embodiments, the present disclosure may be configured to permit both automated operation and manual operation.

Embodiments of the present disclosure may be configured so that the inlet panel structure actuation system 58 can be operated manually (e.g., input commands from an aircraft operator) or operated in an automated manner based on stored instructions (e.g., executed by the controller 70) to shed an ice accumulation on the inlet panel structures 56. During certain operating conditions, water entrained within inlet air may accumulate on the inlet panel structures 56 and freeze. The inlet panel structures 56 can be actuated either manually or in an automated manner to dislodge the accumulated ice.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine disposed within a nacelle, comprising:
an open rotor propulsion system;
a compressor section;
a combustion section;
a turbine section;
an annular airflow inlet in fluid communication with the compressor section, the airflow inlet defined by an inner radial surface and a plurality of inlet panel structures, wherein each inlet panel structure includes an inlet side segment and an outer panel segment, wherein the inlet side segments collectively define an outer radial surface of the airflow inlet;
wherein the inlet side segment and the outer panel segment of each inlet panel structure intersect at an inlet panel leading edge; and
wherein the plurality of inlet panel structures are disposable in a radial inner most configuration and in a radial outer most configuration, wherein in the radial inner most configuration, the inlet panel leading edges are disposed a first distance from the inner radial surface, and wherein in the radial outer most configuration, the inlet panel leading edges are disposed a second distance from the inner radial surface, and wherein the second distance is greater than the first distance; and
an inlet panel structure actuation system configured to selectively actuate the plurality of inlet panel structures between the radial inner most configuration and the radial outer most configuration.

2. The gas turbine engine of claim 1, wherein the gas turbine engine extends axially along a centerline, and the open rotor propulsion (ORP) system includes an ORP rotor and a plurality of ORP stator vanes disposed downstream of and axially spaced apart from the ORP rotor.

3. The gas turbine engine of claim 2, wherein the airflow inlet is disposed axially between the ORP rotor and a plurality of ORP stator vanes.

4. The gas turbine engine of claim 3, wherein in the radial inner most configuration the inlet panel leading edges are collectively disposed at a first radius, and in the radial outer most configuration the inlet panel leading edges are collectively disposed at a second radius, and the second radius is greater than the first radius.

5. The gas turbine engine of any preceding claim, wherein the inlet panel structure actuation system is configured to selectively pivot the plurality of inlet panel structures to translate the inlet panel leading edge of each inlet panel structure radially inward or radially outward.

6. The gas turbine engine of any preceding claim, wherein adjacent said inlet panel structures of the plurality of inlet panel structures overlap with one another.

7. The gas turbine engine of claim 5, further comprising guide vanes disposed within the airflow inlet.

8. The gas turbine engine of any preceding claim, wherein the inlet panel structure actuation system includes an actuator and a controller, wherein the controller is in communication with the actuator and a non-transitory memory storing instructions, which instructions when executed cause the processor to control the actuator to actuate the inlet panel structures toward the radial inner most configuration or toward the radial outer most configuration.

9. The gas turbine engine of claim 8, wherein the controller is configured to receive input commands from an operator and act on the input commands to actuate the inlet panel structures toward the radial inner most configuration or toward the radial outer most configuration; and/or
wherein the controller is configured to receive an engine power setting input and execute the stored instructions based on the engine power setting input to actuate the inlet panel structures toward the radial inner most configuration or toward the radial outer most configuration; and/or
wherein the controller is configured to receive an aircraft altitude input value and execute the stored instructions based on the aircraft altitude input value to actuate the inlet panel structures toward the radial inner most configuration or toward the radial outer most configuration; and/or
wherein the controller is configured to receive an aircraft geographical location data input and execute the stored instructions based on the aircraft geographical location data input to actuate the inlet panel structures toward the radial inner most configuration or toward the radial outer most configuration; and/or
wherein the controller is configured to receive an operating parameter input and execute the stored instructions using the operating parameter input to determine a configuration of the annular airflow inlet.

10. The gas turbine engine of any preceding claim, wherein the inlet panel leading edge is disposed at an inflection point between the inlet side segment and the outer panel segment of each inlet panel structure.

11. The gas turbine engine of any preceding claim, wherein the inlet side segment and the outer panel segment are independent of one another, or,
wherein the inlet side segment and the outer panel segment are integrally formed with one another.

12. A gas turbine engine disposed within a nacelle, comprising:
an open rotor propulsion system;
a compressor section;
an airflow inlet in fluid communication with the compressor section, the airflow inlet defined by a plurality of inlet panel structures, wherein each inlet panel structure includes an inlet side segment and an outer panel segment, wherein the inlet side segments collectively define an outer radial surface of the airflow inlet, and wherein the inlet side segment and the outer panel segment of each inlet panel structure intersect at an inlet panel leading edge; and
an inlet panel structure actuation system configured to selectively actuate the inlet panel leading edge of each said inlet panel structure in a radial inward direction or in a radial outward direction.

13. The gas turbine engine of claim 12, wherein the airflow inlet has an inlet flow area, and actuating the inlet panel leading edge of each said inlet panel structure in the radial inward direction decreases the inlet flow area, and actuating the inlet panel leading edge of each said inlet panel structure in the radial outward direction increases the inlet flow area.

14. The gas turbine area of claim 13, wherein the gas turbine engine extends axially along a centerline, and the open rotor propulsion (ORP) system includes an ORP rotor and a plurality of ORP stator vanes disposed downstream of and axially spaced apart from the ORP rotor, and the airflow inlet is disposed axially between the ORP rotor and a plurality of ORP stator vanes.

15. The gas turbine engine of claim 14, wherein the inlet panel structure actuation system includes an actuator and a controller, wherein the controller is in communication with the actuator and a non-transitory memory storing instructions, which instructions when executed cause the processor to control the actuator to actuate the inlet panel structures in the radial inward direction or in the radial outward direction.
